# EUROPEAN PATENT APPLICATION

(11) **EP 4 564 458 A1**
(43) Date of publication of application: **04.06.2025**
(21) Application number: 23846236.0
(22) Date of filing: 12.07.2023
(51) Int. Cl.: H01M 4/134, H01M 4/133, H01M 4/36, H01M 4/38, H01M 4/587

(54) **NEGATIVE ELECTRODE FOR NONAQUEOUS ELECTROLYTE SECONDARY BATTERIES, AND NONAQUEOUS ELECTROLYTE SECONDARY BATTERY**

(30) Priority: 29.07.2022 JP 2022121723
(71) Applicant: Panasonic Energy Co., Ltd., Osaka 570-8511 (JP)
(72) Inventor: TAMAGAWA Ryo, Kadoma-shi, Osaka 571-0057 (JP); TASHITA Takamitsu, Kadoma-shi, Osaka 571-0057 (JP)
(74) Representative: Novagraaf International SA
(86) International application number: PCT/JP2023/025688
(87) International publication number: WO 2024/024505

(57) **Abstract**

A negative electrode (12) for nonaqueous electrolyte secondary batteries according to the present invention comprises a negative electrode collector (30) and a negative electrode mixture layer (32) that is formed on the negative electrode collector (30); the negative electrode mixture layer (32) comprises a first negative electrode mixture layer (34) and a second negative electrode mixture layer (36), which are arranged on the negative electrode collector (30); the first negative electrode mixture layer (34) contains an Si-based material and graphite particles A; the second negative electrode mixture layer (36) contains an Si-based material and graphite particles B that have a lower internal void fraction than the graphite particles A; and the ratio (T1/T2) of the thickness (T1) of the first negative electrode mixture layer 34 to the thickness (T2) of the second negative electrode mixture layer (36) is not less than 1.05 but less than 1.20.

## Description

### TECHNICAL FIELD

The present disclosure relates to a negative electrode for a non-aqueous electrolyte secondary battery and a non-aqueous electrolyte secondary battery.

### BACKGROUND

In a non-aqueous electrolyte secondary battery, it has been studied to use a Si-based material as a negative electrode active material for increasing the capacity of the battery.

For example, Patent Literature 1 discloses that a Si-based material containing a lithium silicate phase represented by Li_{2z}SiO_{(2+z)} (0 < z < 2) and Si particles dispersed in the lithium silicate phase is used as a negative electrode active material.

### CITATION LIST

### PATENT LITERATURE

Patent Literature 1: WO 2016-035290 A

### SUMMARY

By the way, since a Si-based material has a large volume change (expansion and contraction) at the time of charging and discharging, when charging and discharging are repeated, a negative electrode mixture layer is collapsed due to a large volume change of the Si-based material, such as cracking of the negative electrode mixture layer and falling off of a negative electrode active material, and there is a problem in that charge and discharge cycle characteristics are easily deteriorated.

Therefore, an object of the present disclosure is to provide a negative electrode for a non-aqueous electrolyte secondary battery capable of suppressing deterioration of the charge and discharge cycle characteristics, and a non-aqueous electrolyte secondary battery including the negative electrode for a non-aqueous electrolyte secondary battery.

A negative electrode for a non-aqueous electrolyte secondary battery according to one aspect of the present disclosure includes a negative electrode current collector, and a negative electrode mixture layer formed on the negative electrode current collector, in which the negative electrode mixture layer includes a first negative electrode mixture layer and a second negative electrode mixture layer disposed on the negative electrode current collector, the first negative electrode mixture layer contains a Si-based material and graphite particles A, and the second negative electrode mixture layer contains a Si-based material and graphite particles B having an internal porosity smaller than that of the graphite particles A, and a ratio (T1/T2) of a thickness (T1) of the first negative electrode mixture layer to a thickness (T2) of the second negative electrode mixture layer is in a range of greater than or equal to 1.05 and less than 1.20.

Further, a non-aqueous electrolyte secondary battery according to one aspect of the present disclosure includes the negative electrode for a non-aqueous electrolyte secondary battery.

According to one aspect of the present disclosure, it is possible to provide a negative electrode for a non-aqueous electrolyte secondary battery capable of suppressing deterioration of charge and discharge cycle characteristics, and a non-aqueous electrolyte secondary battery including the negative electrode for a non-aqueous electrolyte secondary battery.

### BRIEF DESCRIPTION OF DRAWINGS

FIG. 1 is a cross-sectional view of a non-aqueous electrolyte secondary battery as an example of an embodiment.
FIG. 2 is a cross-sectional view of a negative electrode as an example of the embodiment.
FIG. 3 is a plan view of the negative electrode as an example of the embodiment.
FIG. 4 is a cross-sectional view illustrating a particle cross section of a graphite particle.
FIG. 5 is a plan view illustrating another example of the negative electrode mixture layer.
FIG. 6 is a plan view illustrating another example of the negative electrode mixture layer.

### DESCRIPTION OF EMBODIMENTS

Hereinafter, an example of an embodiment will be described in detail with reference to the drawings. Note that a non-aqueous electrolyte secondary battery of the present disclosure is not limited to the embodiments described below. In addition, the drawings referred to in the Description of Embodiments are schematically illustrated.

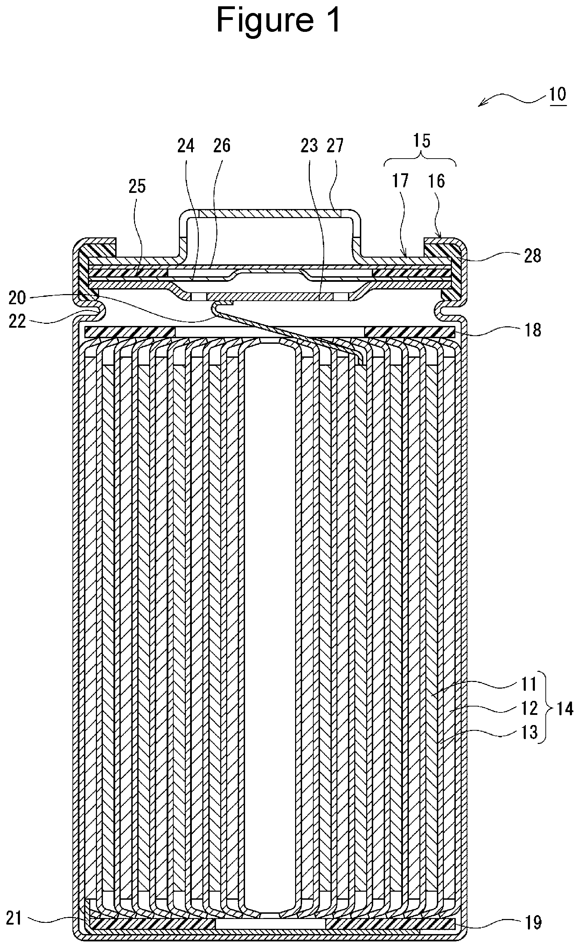

FIG. 1 is a cross-sectional view of a non-aqueous electrolyte secondary battery as an example of an embodiment. A non-aqueous electrolyte secondary battery 10 illustrated in FIG. 1 includes a wound-type electrode assembly 14 formed by winding a positive electrode 11 and a negative electrode 12 with a separator 13 interposed therebetween, a non-aqueous electrolyte, insulating plates 18 and 19 disposed on and under the electrode assembly 14, respectively, and a battery case 15 housing the above-described members therein. The battery case 15 includes a bottomed cylindrical case body 16 and a sealing assembly 17 that closes an opening of the case body 16. Instead of the wound-type electrode assembly 14, another type of electrode assembly, such as a stack-type electrode assembly in which positive electrodes and negative electrodes are alternately stacked with separators interposed therebetween, may be applied. In addition, the battery case 15 is not limited to a cylindrical metal exterior can, and examples thereof include metal exterior cans such as square, coin, and button shapes, and a pouch exterior body formed by laminating a resin sheet and a metal sheet.

The case body 16 is, for example, a bottomed cylindrical metal exterior can. A gasket 28 is provided between the case body 16 and the sealing assembly 17 to ensure sealability inside the battery. The case body 16 has a projecting portion 22 in which, for example, a part of a side surface portion of the case body 16 projects inward to support the sealing assembly 17. The projecting portion 22 is preferably formed in an annular shape in the circumferential direction of the case body 16, and supports the sealing assembly 17 on the upper surface of the projecting portion.

The sealing assembly 17 is structured by layering, in sequence from the electrode assembly 14 side, a filter 23, a lower vent member 24, an insulating member 25, an upper vent member 26, and a cap 27. Each member constituting the sealing assembly 17 has, for example, a disk shape or a ring shape, and the members excluding the insulating member 25 are electrically connected to each other. The lower vent member 24 and the upper vent member 26 are connected to each other at the respective central portions, and the insulating member 25 is interposed between the respective peripheral portions. When the internal pressure of the non-aqueous electrolyte secondary battery 10 increases due to heat generation caused by an internal short circuit or the like, for example, the lower vent member 24 is deformed to push up the upper vent member 26 toward the cap 27 side and is broken, and a current path between the lower vent member 24 and the upper vent member 26 is cut off. When the internal pressure is further increased, the upper vent member 26 is broken, and gas is discharged through the opening of the cap 27.

In the non-aqueous electrolyte secondary battery 10 illustrated in FIG. 1, a positive electrode lead 20 attached to the positive electrode 11 extends through a through-hole of the insulating plate 18 toward a side of the sealing assembly 17, and a negative electrode lead 21 attached to the negative electrode 12 extends through the outside of the insulating plate 19 toward the bottom side of the case body 16. The positive electrode lead 20 is connected to a lower surface of the filter 23, which is a bottom plate of the sealing assembly 17, by welding or the like, and the cap 27, which is a top plate of the sealing assembly 17 electrically connected to the filter 23, serves as a positive electrode terminal. The negative electrode lead 21 is connected to a bottom inner surface of the case body 16 by welding or the like, and the case body 16 becomes a negative electrode terminal.

Hereinafter, each component of the non-aqueous electrolyte secondary battery 10 will be described in detail.

### [Negative Electrode]

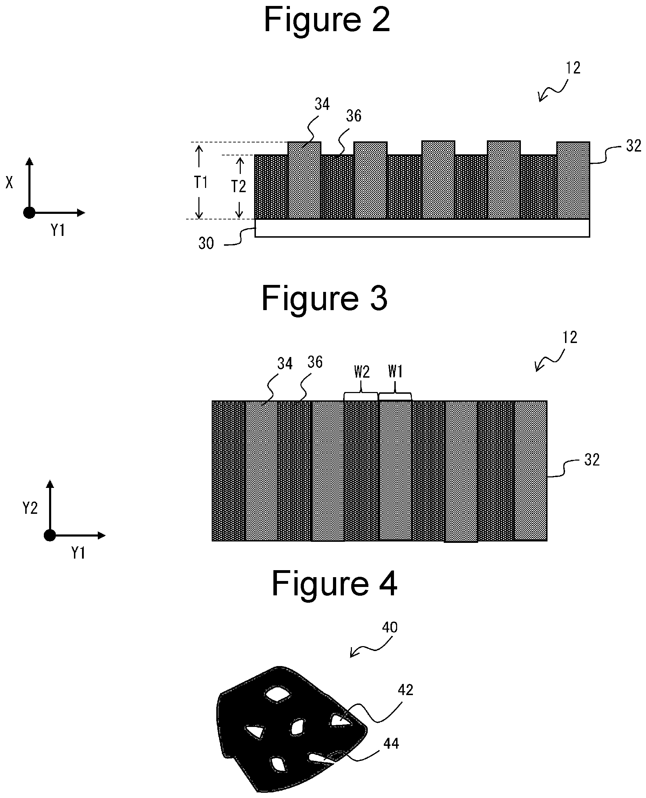

FIG. 2 is a cross-sectional view of the negative electrode as an example of the embodiment, and FIG. 3 is a plan view of the negative electrode as an example of the embodiment. FIGS. 2 and 3 illustrate the negative electrode 12 in a state before being wound as the electrode assembly 14 in FIG. 1. In the following description, in a planar direction of the negative electrode 12 orthogonal to a thickness direction (an arrow X in FIG. 2) of the negative electrode 12, a longitudinal direction of the negative electrode 12 is referred to as a first direction (an arrow Y1 in FIGS. 2 and 3), and a width direction of the negative electrode 12 orthogonal to the first direction is referred to as a second direction (an arrow Y2 in FIG. 3).

As illustrated in FIG. 2, the negative electrode 12 includes a negative electrode current collector 30 and a negative electrode mixture layer 32 formed on a surface of the negative electrode current collector 30. As the negative electrode current collector 30, for example, a foil of a metal that is stable in a potential range of the negative electrode 12, such as copper, a film in which the metal is disposed on a surface layer thereof, or the like is used. The thickness of the negative electrode current collector 30 is, for example, greater than or equal to 5 µm and less than or equal to 30 µm.

The negative electrode mixture layer 32 has a first negative electrode mixture layer 34 and a second negative electrode mixture layer 36 disposed on the negative electrode current collector 30. As illustrated in FIG. 3, the first negative electrode mixture layer 34 and the second negative electrode mixture layer 36 are arranged in a stripe shape in plan view. That is, the first negative electrode mixture layer 34 and the second negative electrode mixture layer 36 are alternately arranged along the first direction (arrow Y1: longitudinal direction of the negative electrode 12). The first negative electrode mixture layer 34 and the second negative electrode mixture layer 36 extend in the second direction (arrow Y2: width direction of the negative electrode 12) and reach both ends in the width direction of the negative electrode 12. Although not illustrated, the first negative electrode mixture layers 34 and the second negative electrode mixture layers 36 arranged in a stripe shape may be alternately arranged along the second direction, and may extend in the first direction to reach both ends in the longitudinal direction of the negative electrode 12.

The first negative electrode mixture layer 34 contains a Si-based material and graphite particles A as a negative electrode active material. **In** addition, the second negative electrode mixture layer 36 contains, as a negative electrode active material, a Si-based material and graphite particles B having an internal porosity smaller than that of the graphite particles A. A ratio (T1/T2) of a thickness (T1) of the first negative electrode mixture layer 34 to a thickness (T2) of the second negative electrode mixture layer 36 is greater than or equal to 1.05 and less than 1.20, and preferably greater than or equal to 1.10 and less than or equal to 1.15. **In** the present disclosure, the internal porosity of the graphite particles means a two-dimensional value obtained from a ratio of an area of internal pores of the graphite particles to a cross-sectional area of the graphite particles. As illustrated in FIG. 4, the internal pore of the graphite particle is a closed pore 42 that is not connected to the surface of the particle from the inside of the particle in a cross-sectional view of a graphite particle 40. A pore 44 connected to the surface of the particle from the inside of the particle illustrated in FIG. 4 is referred to as an external pore, and is not included as the internal pore. A method of measuring the internal porosity of the graphite particle is described below.

As described above, by setting the ratio (T1/T2) of the thickness (T1) of the first negative electrode mixture layer 34 containing the graphite particles A to the thickness (T2) of the second negative electrode mixture layer 36 containing the graphite particles B having an internal porosity smaller than that of the graphite particles A to greater than or equal to 1.05 and less than 1.20, it is possible to disperse the stress due to the volume change of the Si-based material during charging and discharging and to suppress the collapse of the negative electrode mixture layer 32, so that it is possible to suppress the deterioration of the charge and discharge cycle characteristics.

The width (W1) of the first negative electrode mixture layer 34 and the width (W2) of the second negative electrode mixture layer 36 are each preferably greater than or equal to 0.1 mm and less than or equal to 5.0 mm, and more preferably greater than or equal to 1.0 mm and less than or equal to 4.0 mm, from the viewpoint of further suppressing the deterioration of charge and discharge cycle characteristics.

The internal porosities of the graphite particles A and B are determined by the following procedure.

### <Method of Measuring Internal Porosity>

(1) A cross section of a negative electrode active material layer is exposed. Examples of a method of exposing the cross section include a method of exposing the cross section of the negative electrode active material layer by cutting a part of the negative electrode and machining the cut part with an ion milling apparatus (for example, IM4000PLUS manufactured by Hitachi High-Tech Corporation).
(2) A backscattered electron image of the exposed cross section of the negative electrode active material layer is captured using a scanning electron microscope. A magnification when the backscattered electron image is captured is 3,000 times to 5,000 times.
(3) A cross-sectional image acquired by the above-described process is read into a computer, binarization processing is applied using an image analyzing software (for example, ImageJ manufactured by National Institutes of Health), and a binarized image is acquired in which a particle cross section in the cross-sectional image is converted into black color and pores existing in the particle cross section are converted into white color.
(4) The graphite particles A and B having a particle size of greater than or equal to 5 µm and less than or equal to 50 µm are selected from the binarized image, and the area of the graphite particle cross section and the area of the internal pores existing in the graphite particle cross section are calculated. Here, the area of the graphite particle cross section refers to an area of a region surrounded by an outer periphery of the graphite particle, that is, an area of the entire cross-sectional portion of the graphite particle. In addition, among the pores existing in the graphite particle cross section, for a pore having a width of less than or equal to 3 µm, it may be difficult to determine whether the pore is the internal pore or the external pore in the image analysis, and thus, the pore having the width of less than or equal to 3 µm may be determined as the internal pore. The internal porosity of the graphite particle is calculated (the area of the internal pore of the graphite particle cross section × 100/the area of the graphite particle cross section) based on the calculated area of the graphite particle cross section and the calculated area of the internal pore of the graphite particle cross section. The internal porosity of each of the graphite particles A and B is an average value of ten graphite particles A or B.

The internal porosity of the graphite particles A is, for example, preferably greater than or equal to 8% and less than or equal to 20%, more preferably greater than or equal to 10% and less than or equal to 18%, and particularly preferably greater than or equal to 12% or more and less than or equal to 16%. The graphite particle A having such a high internal porosity can be prepared, for example, as follows. Coke (precursor) as a main raw material is pulverized to a predetermined size, and the pulverized coke (precursor) is agglomerated with a binding material, and then further fired and graphitized at a temperature of greater than or equal to 2600°C in a state of being pressure-formed into a block shape. The block-shaped molded body after the graphitization is ground and sieved, to obtain the graphite particles of a desired size. Here, by increasing the amount of volatile component added to the block-shaped molded body, the internal porosity of the graphite particles can be increased (for example, in the range of 8% to 20%). When a part of the binding material added to the cokes (precursors) vaporizes during the firing, the binding material may be used as the volatile component. A pitch may be exemplified as such a binding material.

The internal porosity of the graphite particles B is, for example, preferably less than or equal to 5%, more preferably greater than or equal to 1% and less than or equal to 5%, and particularly preferably greater than or equal to 3% and less than or equal to 5%. The graphite particle having such a low internal porosity can be prepared, for example, as follows. Coke (precursor) as a main raw material is pulverized into a predetermined size, and in a state where the pulverized coke is aggregated with a binding material, the coke is fired at a temperature of greater than or equal to 2600°C, graphitized, and then sieved to obtain graphite particles having a desired size. Here, the internal porosity of the graphite particles can be adjusted by a particle size of the precursor after being pulverized, a particle size of the precursor in the aggregated state, or the like. For example, by increasing the particle size of the precursor after being pulverized or the particle size of the precursor in the aggregated state, the internal porosity of the graphite particles can be reduced (for example, less than or equal to 5%).

No particular limitation is imposed on the graphite particles A and B used in the present embodiment, such as natural graphite and artificial graphite, but from the viewpoint of ease of adjustment of the internal porosity, the artificial graphite is preferably employed. A plane spacing (d₀₀₂) of a (002) plane determined by an X-ray wide angle diffraction for the graphite particles A and B used in the present embodiment is preferably, for example, greater than or equal to 0.3354 nm, is more preferably greater than or equal to 0.3357 nm, is preferably less than 0.340 nm, and is more preferably less than or equal to 0.338 nm. In addition, a crystallite size (Lc(002)) determined by the X-ray diffraction for the graphite particles A and B used in the present embodiment is preferably, for example, greater than or equal to 5 nm, is more preferably greater than or equal to 10 nm, is preferably less than or equal to 300 nm, and is more preferably less than or equal to 200 nm. When the plane spacing (d₀₀₂) and the crystallite size (Lc(002)) satisfy the above ranges, the battery capacity of the non-aqueous electrolyte secondary battery tends to be larger than that when the above ranges are not satisfied. At least a part of the surface of the graphite particle A may be coated with amorphous carbon.

The graphite particles contained in the first negative electrode mixture layer 34 are preferably only the graphite particles A, but may contain graphite particles (for example, graphite particles B) other than the graphite particles A as long as the effect of the present embodiment is not impaired. The content of the graphite particles A contained in the first negative electrode mixture layer 34 may be, for example, greater than or equal to 90 mass% and less than or equal to 100 mass% with respect to the total mass of the graphite particles contained in the first negative electrode mixture layer 34. The graphite particles contained in the second negative electrode mixture layer 36 are preferably only the graphite particles B, but may contain graphite particles (for example, graphite particles A) other than the graphite particles B as long as the effect of the present embodiment is not impaired. The content of the graphite particles B contained in the second negative electrode mixture layer 36 may be, for example, greater than or equal to 90 mass% and less than or equal to 100 mass% with respect to the total mass of the graphite particles contained in the second negative electrode mixture layer 36.

The total content of the graphite particles A and the graphite particles B contained in the negative electrode mixture layer 32 may be, for example, greater than or equal to 85 mass% and less than or equal to 99 mass% with respect to the total mass of the negative electrode active material.

The Si-based material includes, for example, a lithium ion conducting phase and Si particles dispersed in the lithium ion conducting phase. The lithium ion conducting phase includes, for example, at least one of a silicon oxide phase, a silicate phase, and a carbon phase.

The silicate phase preferably contains, for example, at least one element of alkali metal elements of lithium, sodium, potassium, rubidium, cesium, and francium, and Group 2 elements of the periodic table to which lithium, sodium, potassium, rubidium, cesium, and francium belong from the viewpoint of high lithium ion conductivity and the like. Among the silicate phases, a silicate phase including lithium (hereinafter, may be referred to as a lithium silicate phase) is preferable from the viewpoints of high lithium ion conductivity and the like.

The lithium silicate phase is represented by, for example, a formula: Li_{2z}SiO_{2+z} (0 < z < 2). From the viewpoints of stability, ease of preparation, lithium ion conductivity, and the like, z preferably satisfies the relation of 0 < z < 1, and more preferably z = 1/2.

The composite particles in which Si particles are dispersed in a silicon oxide phase are represented by, for example, a general formula SiOₓ (here, x is preferably in the range of 0 < x < 2, and more preferably in the range of 0.5 ≤ x ≤ 1.6). The composite particles in which Si particles are dispersed in a carbon phase are represented by, for example, a general formula SiₓC_{y} (here, ranges of 0 < x ≤ 1 and 0 < y ≤ 1 are preferable).

A conductive layer coated with conductive carbon may be formed on the surface of the Si-based material. The conductive layer can be formed with, for example, a CVD method in which acetylene, methane, or the like is used, a method in which coal pitch, petroleum pitch, a phenol resin, or the like is mixed with a silicon-based active material and the mixture is heat-treated, or the like. As a heat treatment apparatus that performs the heat treatment, for example, a hot air furnace, a hot press, a lamp, a sheath heater, a ceramic heater, a rotary kiln, or the like can be used. In addition, the conductive layer may be formed by fixing a conductive filler such as carbon black to the particle surface of the Si-based material using a binding material.

The total content of the Si-based material contained in the first negative electrode mixture layer 34 and the second negative electrode mixture layer 36 is preferably greater than or equal to 0.1 mass% and less than or equal to 10 mass% with respect to the total mass of the graphite particles A and B contained in the first negative electrode mixture layer 34 and the second negative electrode mixture layer 36, for example, from the viewpoint of increasing the capacity of the battery, suppressing a decrease in charge and discharge cycle characteristics, and the like.

The negative electrode active material contained in the negative electrode mixture layer 32 may contain other materials capable of reversibly occluding and releasing lithium ions in addition to the graphite particles A, B, and Si-based materials used in the present embodiment. Examples thereof include carbon materials other than graphite particles, Sn, alloys containing Sn, Sn-based materials such as tin oxide, and Ti-based materials such as lithium titanate.

The negative electrode mixture layer 32 may contain a conductive agent. Examples of the conductive agent include carbon materials such as carbon black (CB), acetylene black (AB), Ketjenblack, graphite, and carbon nanotube. Among them, one type may be used alone, or two or more types may be used in combination.

The negative electrode mixture layer 32 may further contain a binding material. Examples of the binding material include a fluorine-based resin, a polyimide-based resin, an acryl-based resin, a polyolefin-based resin, polyacrylonitrile (PAN), a styrene-butadiene rubber (SBR), a nitrile-butadiene rubber (NBR), carboxymethyl cellulose (CMC) or a salt thereof, polyacrylic acid (PAA) or a salt thereof (PAA-Na, PAA-K, etc., and partially neutralized salts may be used), polyvinyl alcohol (PVA), and the like. Among them, one type may be used alone, or two or more types may be used in combination.

An example of a method of preparing the negative electrode 12 according to the present embodiment will be described. First, graphite particles A, a binding material, and a solvent such as water are mixed to prepare a slurry for a first negative electrode mixture layer. Separately from this, the graphite particles B, the binding material, and a solvent such as water are mixed to prepare a slurry for the second negative electrode mixture layer. Then, the slurry for the first negative electrode mixture layer and the slurry for the second negative electrode mixture layer are alternately applied to both surfaces of the negative electrode current collector 30 along the surface direction, and rolled by a rolling roller. The coating thickness of the first negative electrode mixture layer is made larger than the coating thickness of the slurry for the second negative electrode mixture layer such that the ratio (T1/T2) of the thickness (T1) of the first negative electrode mixture layer to the thickness (T2) of the second negative electrode mixture layer is greater than or equal to 1.05 and less than 1.20. In this way, the negative electrode 12 of the present embodiment can be prepared.

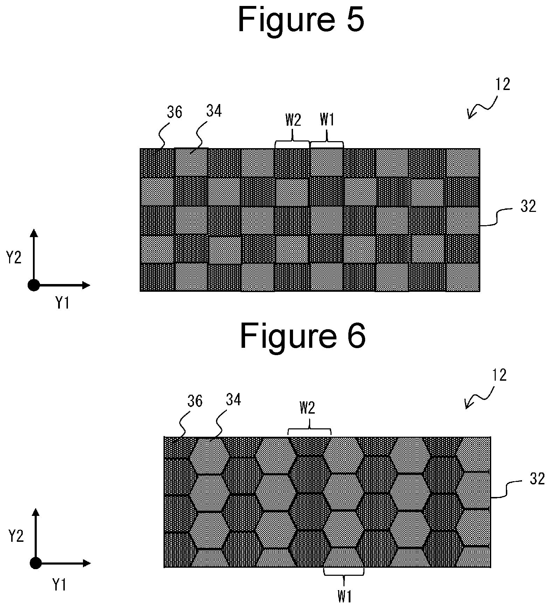

The arrangement of the first negative electrode mixture layer 34 and the second negative electrode mixture layer 36 in plan view is not limited to the stripe shape as illustrated in FIG. 3. FIGS. 5 and 6 are plan views illustrating another example of the negative electrode mixture layer. The first negative electrode mixture layer 34 and the second negative electrode mixture layer 36 may be arranged in a lattice pattern such as a checkered pattern as illustrated in FIG. 5, or may be arranged in a honeycomb shape as illustrated in FIG. 6, for example, in plan view. Although not illustrated in the drawings, the first negative electrode mixture layer 34 and the second negative electrode mixture layer 36 may be disposed in a spiral shape in plan view, for example.

### [Positive Electrode]

The positive electrode 11 includes a positive electrode current collector such as a metal foil and a positive electrode mixture layer formed on the positive electrode current collector. As the positive electrode current collector, a foil of a metal, such as aluminum, that is stable in a potential range of the positive electrode, a film in which the metal is disposed on its surface layer, or the like can be used. The positive electrode mixture layer includes, for example, a positive electrode active material, a binding material, and a conductive agent. The positive electrode 11 can be prepared, for example, by applying a positive electrode mixture slurry containing a positive electrode active material, a binding material, a conductive agent, and the like onto a positive electrode current collector, drying the slurry to form a positive electrode mixture layer, and then rolling the positive electrode mixture layer.

Examples of the positive electrode active material include lithium transition metal oxides containing transition metal elements such as Co, Mn, and Ni. Examples of the lithium transition metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M is at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3). Among them, one type may be used alone, or a plurality of types may be used in combination. The positive electrode active material preferably contains a lithium nickel composite oxide such as LiₓNiO₂, LiₓCo_{y}Ni_{1-y}O₂, or LiₓNi_{1-y}M_{y}O_{z} (M is at least one of Na, Mg, Sc, Y, Mn, Fe, Co, Ni, Cu, Zn, Al, Cr, Pb, Sb, and B, 0 <x ≤ 1.2, 0 < y ≤ 0.9, and 2.0 ≤ z ≤ 2.3) from the viewpoint of achieving the high capacity of the non-aqueous electrolyte secondary battery.

Examples of the conductive agent include carbon-based particles such as carbon black (CB), acetylene black (AB), Ketjenblack, carbon nanotube (CNT), graphene, and graphite. Among them, one type may be used alone, or two or more types may be used in combination.

Examples of the binding material include fluorine-based resins such as polytetrafluoroethylene (PTFE) and polyvinylidene fluoride (PVdF), polyimide-based resins, acryl-based resins, polyolefin-based resins, and polyacrylonitrile (PAN). Among them, one type may be used alone, or two or more types may be used in combination.

### [Separator]

As the separator 13, for example, a porous sheet having an ion permeation property and an insulation property is used. Specific examples of the porous sheet include a microporous thin film, a woven fabric, and a nonwoven fabric. As a material of the separator, an olefin-based resin such as polyethylene or polypropylene, cellulose, or the like is suitable. The separator 13 may be a laminate including a cellulose fiber layer and a thermoplastic resin fiber layer formed of an olefin-based resin or the like. Further, the separator 13 may be a multi-layer separator including a polyethylene layer and a polypropylene layer, or the separator 13 with a material such as an aramid-based resin or ceramic applied onto the surface thereof may be used.

### [Non-Aqueous Electrolyte]

The non-aqueous electrolyte contains a non-aqueous solvent and an electrolyte salt dissolved in the non-aqueous solvent. The non-aqueous electrolyte is not limited to the liquid electrolyte, and may be a solid electrolyte. As the non-aqueous solvent, for example, an ester, an ether, a nitrile such as acetonitrile, an amide such as dimethylformamide, a mixed solvent of two or more thereof, or the like can be used. The non-aqueous solvent may contain a halogen-substituted product in which at least some of hydrogen in any of the solvents described above are substituted with a halogen atom such as fluorine.

Examples of the ester include a cyclic carbonic acid ester such as ethylene carbonate (EC), propylene carbonate (PC), or butylene carbonate, a chain carbonic acid ester such as dimethyl carbonate (DMC), ethyl methyl carbonate (EMC), diethyl carbonate (DEC), methyl propyl carbonate, ethyl propyl carbonate, or methyl isopropyl carbonate, a cyclic carboxylic acid ester such as γ-butyrolactone or γ-valerolactone, and a chain carboxylic acid ester such as methyl acetate, ethyl acetate, propyl acetate, methyl propionate (MP), or ethyl propionate.

Examples of the ether include a cyclic ether such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, or crown ether, and a chain ether such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, or tetraethylene glycol dimethyl ether.

As the halogen-substituted product, a fluorinated cyclic carbonic acid ester such as fluoroethylene carbonate (FEC), a fluorinated chain carbonic acid ester, a fluorinated chain carboxylic acid ester such as methyl fluoropropionate (FMP), or the like is preferably used.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n is 1 or 2), LiB₁₀Cl₁₀, LiCl, LiBr, LiI, chloroborane lithium, lithium lower aliphatic carboxylate, a borate such as Li₂B₄O₇ or Li(B(C₂O₄)F₂), and an imide salt such as LiN(SO₂CF₃)₂ or LiN(C₁F₂ₗ₊₁SO₂)(CₘF₂ₘ₊₁SO₂) {l and m are integers of greater than or equal to 1}. Among these lithium salts, one type may be used alone, or a plurality of types may be used in combination. Among these lithium salts, LiPF₆ is preferably used from the viewpoints of ion conductivity, electrochemical stability, and the like. The concentration of the lithium salt is preferably greater than or equal to 0.8 mol and less than or equal to 1.8 mol per L of the solvent.

### EXAMPLES

Hereinafter, the present disclosure will be further described with reference to Examples. However, the present disclosure is not limited to these Examples.

### <Example 1>

### [Preparation of Positive Electrode]

As a positive electrode active material, a lithium transition metal oxide represented by LiNi_{0.88}Co_{0.09}Al_{0.03} was used. 100 parts by mass of the positive electrode active material, 0.8 parts by mass of carbon black as a conductive agent, and 0.7 parts by mass of a polyvinylidene fluoride powder as a binding material were mixed, and an appropriate amount of N-methyl -2 pyrrolidone (NMP) was further added to prepare a positive electrode mixture slurry. This slurry was applied to both surfaces of a positive electrode current collector made of an aluminum foil (thickness: 15 µm), the coating film was dried, and then the coating film was rolled by a rolling roller to prepare a positive electrode in which a positive electrode mixture layer was formed on both surfaces of the positive electrode current collector.

### [Preparation of Graphite Particles A]

Coke was pulverized until the average particle size (D50) reached 15 µm, and pitch as a binding material was added to the pulverized coke to aggregate the coke. An isotropic pressure was applied to the aggregate to prepare a block-shaped molded body having a density of 1.6 g/cm³ to 1.9 g/cm³. The block-shaped molded body was fired at a temperature of 2800°C to be graphitized, and then the graphitized block-shaped molded body was ground and sieved to obtain the graphite particles A having a volume average particle size (D50) of 23 µm.

### [Preparation of Graphite Particles B]

Coke was pulverized until the average particle size (D50) reached 12 µm, pitch as a binding material was added to the pulverized coke, and the coke was aggregated until the average particle size (D50) reached 17 µm. This aggregate was fired at a temperature of 2,800°C for graphitization. Next, the graphitized block-shaped molded body was ground and sieved to obtain the graphite particles B having a volume average particle size (D50) of 23 µm.

### [Preparation of Negative Electrode]

The graphite particles A and SiO were mixed at a mass ratio of 100:6 to obtain a first negative electrode active material. 100 parts by mass of the first negative electrode active material, 1 part by mass of sodium salt of carboxymethyl cellulose (CMC-Na), and 1 part by mass of styrene-butadiene copolymer rubber (SBR) were mixed, and the mixture was kneaded in water to prepare a slurry for a first negative electrode mixture layer.

The graphite particles B and SiO were mixed at a mass ratio of 100:6 to obtain a second negative electrode active material. 100 parts by mass of the second negative electrode active material, 1 part by mass of CMC-Na, and 1 part by mass of SBR were mixed, and the mixture was kneaded in water to prepare a slurry for a second negative electrode mixture layer.

The slurry for first region and the slurry for second region were alternately applied to both surfaces of a negative electrode current collector made of a copper foil in a stripe shape illustrated in FIGS. 2 and 3 and dried to form a negative electrode mixture layer including a first negative electrode mixture layer having a width (W1) of 2 mm in the second direction and a second negative electrode mixture layer having a width (W2) of 2 mm in the second direction. The first negative electrode mixture layer and the second negative electrode mixture layer were rolled with a rolling roller to prepare a negative electrode. The ratio (T1/T2) of the thickness (T1) of the first negative electrode mixture layer to the thickness (T2) of the second negative electrode mixture layer of the prepared negative electrode was 1.05.

From the obtained negative electrode, the internal porosities of the graphite particles A and the graphite particles B in the negative electrode mixture layer were measured. As a result, the internal porosity of the graphite particles A was 15%, and the internal porosity of the graphite particles B was 3%. A method of measuring the internal porosity is as described above.

### [Preparation of Non-Aqueous Electrolyte]

2 parts by mass of vinylene carbonate (VC) was added to a non-aqueous solvent obtained by mixing ethylene carbonate (EC), dimethyl carbonate (DMC), and ethyl methyl carbonate (EMC) at a volume ratio of 2:6:2, and LiPF₆ as an electrolyte was dissolved at a concentration of 1.3 mol/L. In this way, the non-aqueous electrolyte was prepared.

### [Preparation of Test Cell]

A positive electrode lead made of aluminum was attached to the positive electrode current collector, and a negative electrode lead made of nickel was attached to the negative electrode current collector to prepare a stacked electrode assembly in which the positive electrode and the negative electrode were stacked with a separator made of polyolefin interposed therebetween. The electrode assembly was housed in an exterior body formed of an aluminum laminate sheet, the non-aqueous electrolyte was injected, and then an opening of the exterior body was sealed to obtain a test cell.

### <Example 2>

A test cell was prepared in the same manner as in Example 1 except that the width (W1) of the first negative electrode mixture layer and the width (W2) of the second negative electrode mixture layer negative electrode were each 1 mm, and the ratio (T1/T2) of the thickness (T1) of the first negative electrode mixture layer to the thickness (T2) of the second negative electrode mixture layer was 1.10.

### <Example 3>

A test cell was prepared in the same manner as in Example 1 except that the ratio (T1/T2) of the thickness (T1) of the first negative electrode mixture layer to the thickness (T2) of the second negative electrode mixture layer was 1.10.

### <Example 4>

A test cell was prepared in the same manner as in Example 1 except that the width (W1) of the first negative electrode mixture layer and the width (W2) of the second negative electrode mixture layer negative electrode were set to 5 mm, respectively, and the ratio (T1/T2) of the thickness (T1) of the first negative electrode mixture layer to the thickness (T2) of the second negative electrode mixture layer was set to 1.10.

### <Example 5>

A test cell was prepared in the same manner as in Example 1 except that the ratio (T1/T2) of the thickness (T1) of the first negative electrode mixture layer to the thickness (T2) of the second negative electrode mixture layer was 1.15.

### <Comparative Example 1>

A test cell was prepared in the same manner as in Example 1 except that the ratio (T1/T2) of the thickness (T1) of the first negative electrode mixture layer to the thickness (T2) of the second negative electrode mixture layer was 0.95.

### <Comparative Example 2>

The slurry for the second negative electrode mixture layer was applied to both surfaces of a negative electrode current collector made of a copper foil, and dried to form a negative electrode mixture layer made of only the second negative electrode mixture layer having a width (W2) of 100 mm in the second direction. Then, the second negative electrode mixture layer was rolled by a rolling roller to prepare a negative electrode. Except that this negative electrode was used, the same procedure as in Example 1 was carried out to prepare a test cell.

### <Comparative Example 3>

A test cell was prepared in the same manner as in Example 1 except that the ratio (T1/T2) of the thickness (T1) of the first negative electrode mixture layer to the thickness (T2) of the second negative electrode mixture layer was 1.00.

### <Comparative Example 4>

A test cell was prepared in the same manner as in Example 1 except that the ratio (T1/T2) of the thickness (T1) of the first negative electrode mixture layer to the thickness (T2) of the second negative electrode mixture layer was 1.25.

### <Comparative Example 5>

A test cell was prepared in the same manner as in Example 1 except that the ratio (T1/T2) of the thickness (T1) of the first negative electrode mixture layer to the thickness (T2) of the second negative electrode mixture layer was 1.20.

### [Evaluation of Volume Energy Density]

Under an environmental temperature of 25°C, the test cell of each of the examples and the comparative examples was charged at a constant current of 1 C until 4.2 V is reached, and then charged at a constant voltage of 4.2 V until 1/50 C is reached. Thereafter, constant current discharge was performed up to 2.5 V at 0.5 C, and the discharge capacity was measured. The volume energy density of the battery was calculated from the discharge capacity and the dimensions of the test cell.

### [Evaluation of Capacity Retention Rate]

Under an environmental temperature of 25°C, the test cell of each of the examples and the comparative examples was charged at a constant current of 1 C until 4.2 V is reached, and then charged at a constant voltage of 4.2 V until 1/50 C is reached. Thereafter, the test cell was discharged at a constant current of 0.5 C until 2.5 V is reached. This charge and discharge was taken as 1 cycle, and 1000 cycles were performed. A capacity retention rate during the charge and discharge cycle of the test cell of each of the examples and the comparative examples was determined by the following equation. Capacity retention rate = (discharge capacity at 1000 cycles/discharge capacity at 1 cycle) ×100

Table 1 summarizes the results of the volume energy density and the capacity retention rate of the test cells of each Example and each Comparative Example. With respect to the volume energy density, the volume energy density of the test cell of Example 1 was set as a reference value (100), and the volume energy densities of the test cells of other Examples and Comparative Examples were illustrated as relative values.

**[Table 1]**

| | Negative electrode mixture layer | | | Graphite particles (internal porosity) | | Evaluation | |
|---|---|---|---|---|---|---|---|
| | Thickness ratio (T1/T2) of first layer/second layer | Width of first layer | Width of second layer | First layer | Second layer | Energy density | Capacity retention rate |
| | | W1/mm | W2/mm | | | | % |
| Example 1 | 1.05 | 2.0 | 2.0 | Graphite particles A (15%) | Graphite particles B (3%) | 100 | 74 |
| Example 2 | 1.10 | 1.0 | 1.0 | Graphite particles A (15%) | Graphite particles B (3%) | 99 | 71 |
| Example 3 | 1.10 | 2.0 | 2.0 | Graphite particles A (15%) | Graphite particles B (3%) | 99 | 76 |
| Example 4 | 1.10 | 5.0 | 5.0 | Graphite particles A (15%) | Graphite particles B (3%) | 98 | 72 |
| Example 5 | 1.15 | 2.0 | 2.0 | Graphite particles A (15%) | Graphite particles B (3%) | 98 | 71 |
| Comparative Example 1 | 0.95 | 2.0 | 2.0 | Graphite particles A (15%) | Graphite particles B (3%) | 100 | 55 |
| Comparative Example 2 | 1.00 | - | 100 | - | Graphite particles B (3%) | 100 | 64 |
| Comparative Example 3 | 1.00 | 2.0 | 2.0 | Graphite particles A (15%) | Graphite particles B (3%) | 100 | 65 |
| Comparative Example 4 | 1.25 | 2.0 | 2.0 | Graphite particles A (15%) | Graphite particles B (3%) | 95 | 52 |
| Comparative Example 5 | 1.20 | 2.0 | 2.0 | Graphite particles A (15%) | Graphite particles B (3%) | 97 | 64 |

First layer: first negative electrode mixture layer, second layer: second negative electrode mixture layer

In all of the test cells of Examples 1 to 5, the capacity retention rate was improved as compared with the test cell of Comparative Examples 1 to 5. Therefore, as in the test cell of Example, the first negative electrode mixture layer disposed on the negative electrode current collector contains the Si-based material and the graphite particles A, and the second negative electrode mixture layer disposed on the negative electrode current collector contains the Si-based material and the graphite particles B having an internal porosity smaller than that of the graphite particles A, and by setting the ratio (T1/T2) of the thickness (T1) of the first negative electrode mixture layer to the thickness (T2) of the second negative electrode mixture layer to the range of greater than or equal to 1.05 and less than 1.20, deterioration of charge and discharge cycle characteristics can be suppressed.

### <Supplementary Notes>

(1) A negative electrode for a non-aqueous electrolyte secondary battery including:
   a negative electrode current collector; and a negative electrode mixture layer formed on the negative electrode current collector,
   in which the negative electrode mixture layer includes a first negative electrode mixture layer and a second negative electrode mixture layer disposed on the negative electrode current collector,
   the first negative electrode mixture layer contains a Si-based material and graphite particles A, and the second negative electrode mixture layer contains a Si-based material and graphite particles B having an internal porosity smaller than that of the graphite particles A, and
   a ratio (T1/T2) of a thickness (T1) of the first negative electrode mixture layer to a thickness (T2) of the second negative electrode mixture layer is in a range of greater than or equal to 1.05 and less than 1.20.
(2) The negative electrode for a non-aqueous electrolyte secondary battery according to (1), in which a width of each of the first negative electrode mixture layer and the second negative electrode mixture layer is greater than or equal to 0.1 mm and less than or equal to 5.0 mm.
(3) The negative electrode for a non-aqueous electrolyte secondary battery according to (1) or (2), in which the Si-based material contained in the first negative electrode mixture layer and the second negative electrode mixture layer has a lithium ion conducting phase and Si particles dispersed in the lithium ion conducting phase, and the lithium ion conducting phase contains at least one of a silicon oxide phase, a silicate phase, and a carbon phase.
(4) The negative electrode for a non-aqueous electrolyte secondary battery according to (3), in which the silicate phase contains at least one element of an alkali metal element and a Group 2 element of a periodic table.
(5) The negative electrode for a non-aqueous electrolyte secondary battery according to any one of (1) to (4), in which a total content of the Si-based material is greater than or equal to 0.1 mass% and less than or equal to 10 mass% with respect to a total mass of the graphite particles A and B.
(6) The negative electrode for a non-aqueous electrolyte secondary battery according to any one of (1) to (5), in which the graphite particles A have the internal porosity of greater than or equal to 8% and less than or equal to 20%, and the graphite particles B have the internal porosity less than or equal to 5%.
(7) A non-aqueous electrolyte secondary battery including the negative electrode for a non-aqueous electrolyte secondary battery according to any one of (1) to (6).

### REFERENCE SIGNS LIST

- 10: Non-aqueous electrolyte secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket
- 30: Negative electrode current collector
- 32: Negative electrode mixture layer
- 34: First negative electrode mixture layer
- 36: Second negative electrode mixture layer
- 40: Graphite particle
- 42, 44: Pore

## Claims

1. A negative electrode for a non-aqueous electrolyte secondary battery comprising:
a negative electrode current collector; and a negative electrode mixture layer formed on the negative electrode current collector,
wherein the negative electrode mixture layer includes a first negative electrode mixture layer and a second negative electrode mixture layer disposed on the negative electrode current collector,
the first negative electrode mixture layer contains a Si-based material and graphite particles A, and the second negative electrode mixture layer contains a Si-based material and graphite particles B having an internal porosity smaller than that of the graphite particles A, and
a ratio (T1/T2) of a thickness (T1) of the first negative electrode mixture layer to a thickness (T2) of the second negative electrode mixture layer is in a range of greater than or equal to 1.05 and less than 1.20.

2. The negative electrode for a non-aqueous electrolyte secondary battery according to claim 1, wherein a width of each of the first negative electrode mixture layer and the second negative electrode mixture layer is greater than or equal to 0.1 mm and less than or equal to 5.0 mm.

3. The negative electrode for a non-aqueous electrolyte secondary battery according to claim 1 or 2, wherein the Si-based material contained in the first negative electrode mixture layer and the second negative electrode mixture layer has a lithium ion conducting phase and Si particles dispersed in the lithium ion conducting phase, and the lithium ion conducting phase contains at least one of a silicon oxide phase, a silicate phase, and a carbon phase.

4. The negative electrode for a non-aqueous electrolyte secondary battery according to claim 3, wherein the silicate phase contains at least one element of an alkali metal element and a Group 2 element of a periodic table.

5. The negative electrode for a non-aqueous electrolyte secondary battery according to claim 1 or 2, wherein a total content of the Si-based material is greater than or equal to 0.1 mass% and less than or equal to 10 mass% with respect to a total mass of the graphite particles A and B.

6. The negative electrode for a non-aqueous electrolyte secondary battery according to claim 1 or 2, wherein the graphite particles A have the internal porosity of greater than or equal to 8% and less than or equal to 20%, and the graphite particles B have the internal porosity less than or equal to 5%.

7. A non-aqueous electrolyte secondary battery comprising the negative electrode for a non-aqueous electrolyte secondary battery according to claim 1 or 2.
